# EUROPEAN PATENT APPLICATION

(11) **EP 1 675 047 A1**
(43) Date of publication of application: **28.06.2006**
(21) Application number: 04030759.7
(22) Date of filing: 24.12.2004
(51) Int. Cl.: G06Q 10/00

(54) **Method for creating and verifying a privacy policy from a process model, and corresponding computing device and computer program element**

(71) Applicant: International Business Machines Corporation, Armonk, N.Y. 10504 (US)
(72) Inventor: Backes, Michael, CH-8800 Thalwil (CH); Karjoth, Guenter, CH-8820 Waedenswil (CH); Pitzmann, Birgit M., CH-8833 Samstagern (CH); Schunter, Matthias, CH-8003 Zurich (CH); Waidner, Michael P., CH-8804 Au (CH)
(74) Representative: Toleti, Martin

(57) **Abstract**

The method for creating a privacy policy from a process model according to the invention comprises the following steps. First, a task (T1 - T11) from the process model is chosen. Then one or more of the elements role, data, purpose, action, obligation, and condition are gathered from the task and a rule is build up by means of these elements. Finally the rule is added to the privacy policy.

## Description

### TECHNICAL FIELD

The present invention relates to a method for creating a privacy policy from a process model and to a method for verifying the compliance of a privacy policy, which privacy policy particularly can be a privacy policy associated to a business process, The invention further relates to a corresponding computing device and a corresponding computer program element.

### BACKGROUND OF THE INVENTION

A business process model describes actions, decisions within the flow of a business. An example therefor can be the process model of a transaction based on a credit card including the steps - also referred to as tasks in the following - of receiving the credit card number, then sending this credit card number to the credit card agency and upon confirmation, delivering the desired good to the customer. Such business process model typically also indicates how and by whom which data will be used in the respective task. For the business model as well as for the realization of such model it is crucial that the treatment of personal data is appropriately captured in such process, i.e., the process has to be synchronized with existing legal regulations as well as privacy promises given to customers. The common way how such promises and regulations are captured is by means of applying enterprise privacy policies. As today's privacy policies applied to a business process are generated and maintained manually, usually without exploiting the business process structure of the company, such policies are often overly restrictive and the missing synchronization of the privacy promises of a company with its business processes may raise severe privacy violations. Furthermore, considering privacy policies in isolation of business processes complicates their adoption to a changing business environment. Prior approaches did not address this link between business processes and the promised privacy policies as the privacy policy was constructed manually by inspecting a visual representation of a business process. This approach obviously only yields a very weak guarantee that the derived privacy policy is indeed suited and it rapidly becomes highly error-prone once the investigated business process increases in size, given that very large business processes become more common in practice.

In Carlos N. Ribeiro and Paulo Guedes "Verifying Workflow Processes against Organization Security Policies", Proceedings of 8th IEEE International Workshops on Enabling Technologies: Infrastructure for Collaborative Enterprises (WETICE'99), 1999 is described how a workflow process can be checked against security policies, specifically for the workflow process definition language (WPDL) for the workflow and stored procedure language SPL for the security policies. SPL is an extension to SQL that provides flow-control features such as sequencing, branching, and looping, comparable to those features provided in the SQL/PSM standard.

In Carlos N. Ribeiro, Andre Zuquete, Paulo Perreira and Paulo Guedes "Security Policy Consistency", available at http://arxiv.org/abs/cs.LO/0006045, is depicted how different types of inconsistencies within and between security policies and workflow specifications can be checked.

Consequently, it is desired to provide a method for creating a privacy policy from a process model, and particularly from a business process model, wherein the privacy policy is adapted to the process model, and wherein privacy violations are avoided. Further, it is desired to provide a method for verifying whether a business process is compliant with legal regulations and whether a privacy policy declared by the enterprise is met.

### SUMMARY OF THE INVENTION

According to one aspect of the invention, there is provided a method for creating a privacy policy from a process model with the features of the independent claim 1.

The method for creating a privacy policy from a process model according to the invention comprises selecting a task from the process model. Then, one or more of the elements role, data, purpose, action, obligation, and condition are gathered from the task and a rule is build up by means of these elements. Finally the rule is added to the privacy policy.

A process model typically can be regarded as a formal representation of a process which process model typically comprises a collection of tasks. Within a process model, a task can for example indicate who (role) can or shall handle which data (data) for which purpose (purpose) in which way (action) under which obligations (obligation) and maybe under special conditions (condition) in each of these categories. Neither task necessarily needs to be described by including all of these parameters - also referred to elements or categories. While one task may sufficiently be described in the process model by using the data category only - as e.g. only particular data are permitted to be handled in this task irrespective of who etc. handles, other tasks may require describing the full set of parameters to illustrate the requirements imposed on this specific task. The listed collection of categories not necessarily represents an exclusive list; new or different categories may be introduced as needed.

Now, it is desired to create a rule for the selected task representing a privacy policy for this task which rule stipulates all the requirements needed for this task. Thus, the elements/categories derived from the process model representation are assembled, e.g. by means or Boolean operators, and in a preferred embodiment by the AND operator, to create such rule. Such rule is then added to the privacy policy of this particular process, which might comprise rules related to other tasks of the process, already extracted from the process model.

According to a further aspect of the invention, the object is achieved by a method for creating a privacy policy from a process model with the features of the independent claim 10. In this method, the steps are processed automatically by means of a computing device. First a task is selected from a first data set representing the process model. Consequently, the process model is represented as a data set, e.g. by making use of a process description software which finally delivers the data set. The task may be represented by a sub data set of the first data set, and may be extracted from the first data set, i.e. may be selectively extracted. Then, one or more of the elements role, data, purpose, action, obligation, and condition is gathered from the task.

These elements are represented by data of the subset of the first data set, and may be extracted by the routine that is executing the method according to this aspect of the invention. In a third step, a second data set representing a rule is built up by means of the elements. Finally, the rule is added to a third data set representing the privacy policy. The third data set may represent a listing comprising all rules representing the privacy policy assigned to the process model modeled in the first data set.

According to another aspect of the invention, there is provided a method for verifying whether an existing privacy policy is compliant with a process model according to the features of the independent claim 11. This method comprises the following steps: First, a new privacy policy is created by applying one of the methods as introduced above. Then, the existing privacy policy is compared with the new privacy policy, and from the result of this comparison, it is derived whether the existing privacy policy is considered to be compliant. Preferably, the existing privacy policy is considered to be compliant, if the new privacy policy is at least as strict as the existing one. Preferably, this is the case, if the existing privacy policy comprises the same rules as the new privacy policy.

According to another aspect of the invention, this latter method is also automatically executed by means of a computing device, in which method the created new privacy policy is represented by a data set, the existing privacy policy is executed by another data set, and the matching process delivers a result, e.g. in form of data, that is evaluated.

According further aspects of the invention, there are provided a computer program element, computing devices, and a computer program product comprising the features as indicated in the independent claims 14 - 17 respectively.

The computer program element according to the invention comprises computer program code for performing steps according to the one of above mentioned methods when loaded in a digital processor of a computing device.

The computing device for creating a privacy policy according to the invention comprises an engine for choosing a task from the process model, gathering one or more of the elements role, data, purpose, action, obligation, and condition from the task, building up a rule by means of the elements, and adding the rule to the privacy policy:

The computer program product according to the invention stored on a computer usable medium, comprises computer readable program code for causing the computing device to perform one of the above mentioned methods.

Advantageous further developments of the invention arise from the characteristics indicated in the dependent patent claims. These further developments can refer to all the different aspects of the present invention.

Preferably, the method according to the invention further comprises the following steps. A further task in the process model is chosen, and afterwards one or more of the elements role, data, purpose, action, obligation, and condition are gathered from the further task, and a further rule is build up by means of these elements. Finally, the further rule is added to the privacy policy.

Advantageously, the method according to the invention may comprise the steps: If the tasks of the process model are linked together, the choice of a task is made thereby, that one starts at a beginning of the process model and follows the links to the next task, and if the process model contains a branching one follows each branch to the next task.

In a further embodiment of the method according to the invention it is checked whether the process model contains a branching with a condition, and if this is the case the condition is added to the rule.

In another embodiment of the method according to the invention it is checked whether the rule contains several conditions, and if this is the case the conditions are logically linked together.

Furthermore, it is suggested that for extracting the data a simulation of the process is made and it is observed which data are relevant for which task of the process.

In a preferred embodiment of the method according to the invention, a further rule is added to the privacy policy which forbids everything which is not explicitly allowed by the already built up rules. This further rule can be added as a final rule, this is, this final rules is used, if non of the other rules is applicable.

In a typical application of the method according to the invention the process model is gained from a business process.

Finally, in the method according to the invention the process model can be described in workflow process definition language or in unified modeling language.

Additional objects and advantages of the invention will be set forth in the description which follows.

### BRIEF DESCRIPTION OF THE DRAWINGS

The invention and its embodiments will be more fully appreciated by reference to the following detailed description of presently preferred but nonetheless illustrative embodiments in accordance with the present invention when taken in conjunction with the accompanying drawings.

The figures are illustrating:
- FIG. 1: an example of a workflow of an electronic book ordering,
- FIG. 2: in more detailed form the workflow which is executed at the bookshop, and
- FIG. 3: a flow diagram of an embodiment of the method for creating a privacy policy from a process model according to the invention.

### DETAILED DESCRIPTION OF THE DRAWINGS

The method described below illustrates the derivation of a privacy policy from a business model.

In principle, the idea is to extract a privacy policy from a business process or a business process model, e.g., formalized in Business Process Execution Language for Web Services (BPEL) or in another business process modeling language. The specification of BPEL can be found in http://www-128.ibm.com/developerworks/library/ws-bpel/. This extracted privacy policy formalizes the exact data usage by each task of the business process. This can be achieved by means of several methods, depending on the capabilities that the business process model offers.

Case 1: If the business process model underlying the business process already labels the occurring data flows, i.e., if one can immediately see which data will be processed by which task, then this data is used.

Case 2: The same approach can be applied if one does not have a fully specified business process but only unconnected tasks which are already equipped with possible ingoing data, e.g., a process where the different flows between tasks have not been specified yet.

Case 3: If the model of the business process does not already offer such a labeling but only defines the outgoing data of each task as a function on the task, respectively on the state of the task, and the ingoing data, then a reachability analysis in the business process can be performed. More precisely, for any data that may flow into the business process from outside, a simulation can be made and it can be stored which data might be input to which task. Since most business process models have fork operators that are equipped with conditions on where which data may flow this reachability analysis further reveals under which conditions data might be used by a task.

The collected data can then be recomposed into a valid privacy policy, e.g., expressed in enterprise privacy authentication language (EPAL). The Enterprise Privacy Authorization Language is a formal language to specify fine-grained enterprise privacy policies. The specification for EPAL can be found under http://www.zurich.ibm.cbm/security/enterprise-privacy/epal/. EPAL concentrates on the core privacy authorization while abstracting from all deployment details such as data model or user-authentication. An EPAL policy defines lists of hierarchies of user-categories, data-categories, purposes, sets of (privacy) actions, obligations, and conditions. User-categories are the entities (users or groups) that use collected data, e.g., travel expense department or tax auditor. Data-categories define different categories of collected data that are handled differently from a privacy perspective, e.g., medical-record versus contact-data. Purposes model the intended service for which data is used, e.g., processing a travel expense reimbursement or auditing purposes. Actions model how the data is used, e.g., disclose versus read. Obligations define actions that must be taken by the environment of EPAL, e.g., delete after 30 days or get consent. Conditions finally are Boolean expressions that evaluate the context, e.g., the user-category must be an adult or the user-category must be the primary care physician of the data-subject.

These elements, which can be also called criteria, are then used to formulate privacy authorization or privacy rules, which in the following are also called rules, that allow or deny actions on data-categories by user-categories for certain purposes under certain conditions while mandating certain obligations. In order to allow for general rules and exceptions, EPAL rules are sorted by descending precedence. E.g., a rule about a particular employee can be inserted before the rule about the department in order to implement an exception.

More specifically, the business process respectively its simulation yields which data may be used by which user (role) for which action and under which condition. Furthermore, one or more purposes can be assigned to tasks. With that the information to design suitable rules in EPAL is complete. The rules may also be supplemented with obligations, e.g., delete data within 24 hours, which are typically not visible on the business processes but come in the later development process. However, if obligations are explicitly included in the workflow, they can be extracted from the workflow similar to data, roles, purposes, etc. and can then be incorporated into the policy. This derived privacy policy is guaranteed to hold in the business process by construction.

The compliance between the business process and legal regulations can be checked either by querying the legal regulation with all tuples (user, data, purpose, action) that have been collected from the business process or by first deriving the corresponding business process policy and then showing that this policy refines the legal regulations. This comparison can be done automatically.

In the following, the invention is illustrated for case 1, i.e., the model which is underlying the business process already labels the occurring data flows.

As a starting point of the method according to the invention, the business process is augmented with privacy relevant data, mainly the purpose for which a particular task in the business process uses incoming data, and the actual data that is exchanged in the business process graph. Then for all ingoing data, e.g., the number and SSN (Social Security Number) of a customer, to determine where data may flow in the business process under which conditions. Either the business process already has a detailed labeling where data may flow, or one can determine this by means of a simulation which is provided by most tools that allows for specifying business processes. Out of this result, successively a privacy policy is build up by inserting rules for data accesses that may happen in the business process. More precisely, whenever a task is allowed to access data for a specific purpose and specific conditions, a suitable rule is added to the rule-list of the privacy policy. Further, the default value of a privacy policy is used to capture that everything that is not explicitly allowed, is forbidden.

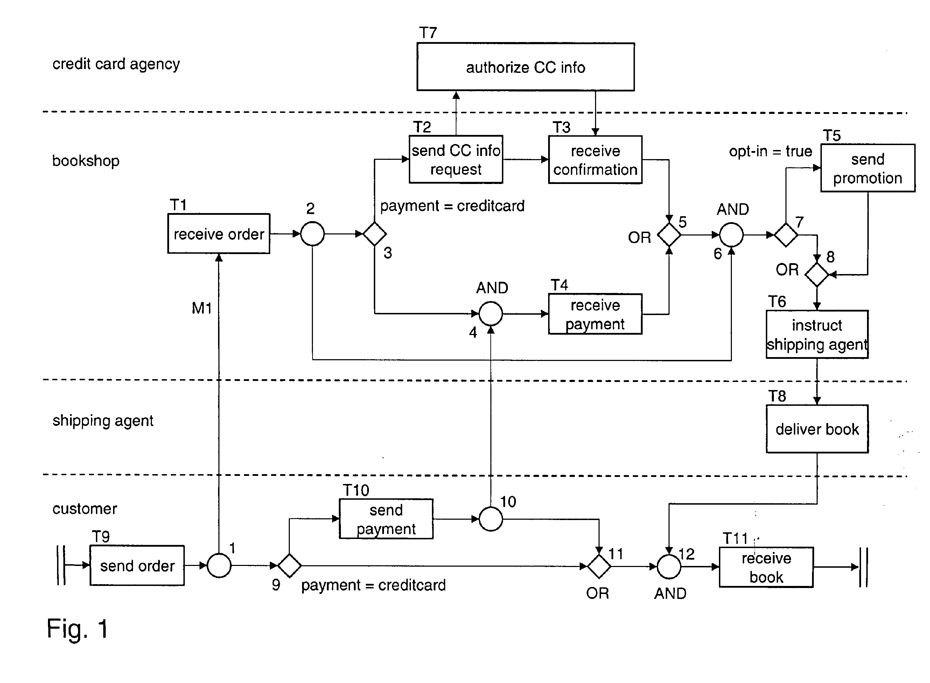

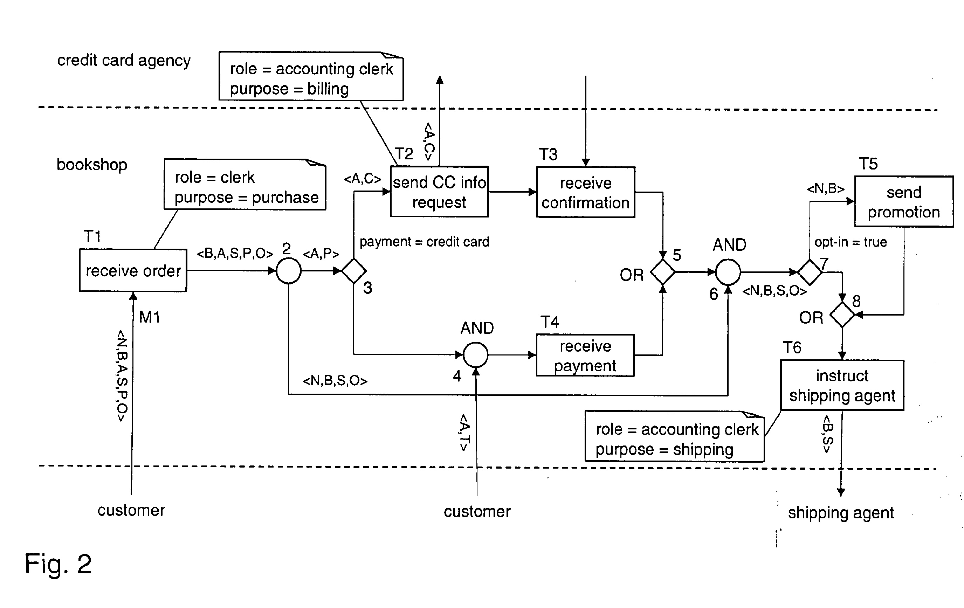

In the following an example for extracting a privacy policy from a business process is described. The example is related to a process of ordering a book from an electronic bookstore. The process can be described for example in Unified Modeling Language Vers. 2 (UML 2), which is a standardized graphic language for constructing, visualizing and documenting process models. Therefore, the book ordering process model is drawn by means of UML 2, wherein the work flow as depicted in FIG. 1 and 2 is the UML state diagram. In principle, an UML state diagram describes an object, which is able to take defined states or attributes by depicting the transitions between initial state to a final state.

FIG. 1 shows the complete work flow of ordering a book. It is divided into four parts: customer, shipping agent, bookshop, and credit card agency. These four parts specify a locus of activities, which also correspond to different organizational units (legal entities) that have to follow their own privacy regulations. In the example, the focus is set on the 6ookshop, which makes a privacy promise to its customers and privacy statements to its business partners, which are in the present example the credit card agency and shipping agent.

In FIG. 1 the workflow is started by the customer executing the send order task T9, which triggers the receive order task T1 at the bookshop. Depending on the kind of payment, different successor tasks follow. In case of a money transfer, the customer makes a money transaction, called send payment task T10, which gets synchronized via broadcast node 10 and a conjunction 4 with the receive payment task T4 at the bookshop. Otherwise, the bookshop executes a credit card authorization request, called send CC info request task T2. The bookshop therefor sends the credit card information C and the amount A of the purchase to the credit card agency, which leads to the execution of the authorize CC info task T7 and afterwards to the receive confirmation task T3. The disjunction 5 accepts any successful payment. Finally, if the customer agreed to get further book information in the future (opt-in = true), a send promotion task T5 is triggered. Otherwise, the execution proceeds immediately with the instruct shipping agent task T6 that asks the shipping agent to deliver the ordered book, which eventually leads the receive book task T11 at the customer. This example does not consider error handling for simplicity.

In the following, only the part of the workflow executed at the bookshop is considered, which is shown in FIG. 2. In this workflow, the edges, also called links, or paths, are augmented with the types of the flowing data and the tasks with their intended purpose. For example, the order message M1 <N,B,A,S,P,O> carries the information name N, the book B, the amount A, the shipping address S, payment P and whether the customer opted-in for a special promotion O. A payment is either made by credit card C or bank transfer T. There are four purposes: purchase, billing, shipping, and promotion. For example, the receive order task T1 acts under purpose "purchase" whereas the instruct shipping agent task T6 acts under purpose "shipping".

Then in the method according to the invention then all tasks are selected that may access incoming data along with the condition that have been accumulated in the current path, e.g., the send CC info request task T2 might access the address A and the Credit Card information C subject to the condition that the selected payment was by credit card.

In principle, a rule rxTy, where x is the number of the rule and y the number of the task for which the rule number x applies to comprises the following elements or criteria:
rxTy = (role, data, purpose/action, condition, obligation)

The privacy police may contain one or more of these rules. The rule rxTy is considered to be fulfilled, if all elements of the rule are fulfilled. This means that for example, if the user is not the user defined in the element role, the rule rxTy is considered to be not fulfilled. This means also that in the task Ty only the data, which are defined in the element data, are allowed to be processed.

In the example depicted in FIG. 2 this would result in the following rules r1T2 to rnT2 in a privacy policy, where r_1 ,..., r_n are the roles that may perform task T2:
rlT2 = (r_1, A, "billing", allowed, "payment = credit card")
r2T2 = (r_1, C, "billing", allowed, "payment = credit card")
...
rn-1T2 = (r_n, A, "billing", allowed, "payment = credit card")
rnT2 = (r_n, C, "billing", allowed, "payment = credit card")
wherein for example the element role r_1 in task T2 is the accounting clerk.

Rule r1T2 means then that in task T2 the accounting clerk is allowed to get information about the amount A and to check whether the amount A can be paid with the credit card.
Rule r2T2 means that in task T2 the accounting clerk is allowed to get information about the credit card C and to check whether a payment can be carried out with the credit card.

This is done for every task T1 to T11 in the business process, and the default value of a privacy policy is used to state that everything that is not explicitly allowed in one of the rules r1T1 to rnT11 should be forbidden. This yields a policy exactly describing the internal practice of the business process. If one restricts these practices to those tasks and data that are output to the outside, e.g., the task T2 outputs the address A and the credit card information C to the credit card agency, one obtains the promises to the customers. More precisely one contains a set of rules that show for which purposes the data may be used, and everything that is not contained in these rules is forbidden.

In particular, the bookshop might then make the following promises to the customer:
- The shipping agent only learns the name of the ordered book B and the shipping address S. The shipping agent does neither learn the name of the buyer N nor her credit card information C if provided in the ordering form.
- The credit card agency only learns the card information C and amount A to be paid. The credit card agency does not learn what should actually be bought (ordered book B) and also not where the goods will be shipped to (shipping address S).
- If a bank transfer instead of a credit card charge is preferred by the customer, the credit card agency is not contacted at all.

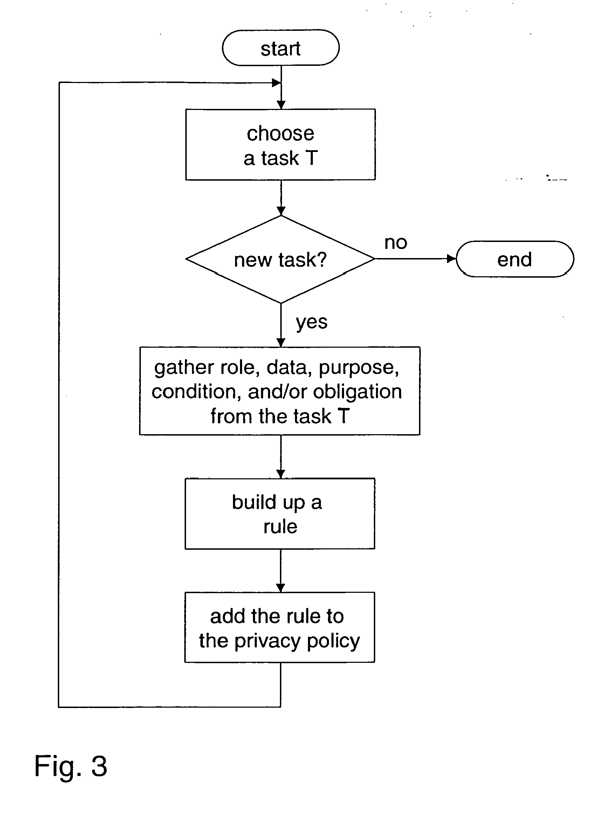

The flow diagram of an embodiment of the method for creating a privacy policy from a process model according to the invention is shown in FIG. 3. First, a task, e.g. task T1, from the process model is chosen. If this task T1 is a new one, i.e., for this task has not yet been created a rule, one or more of the elements role, data, purpose, action, obligation, and condition are gathered from the task and a rule is build up by means of these elements. Afterwards, the rule is added to the policy list. Now a new task, e.g. task T2, is chosen, and the procedure is repeated. These steps are repeated until a rule for each task has been build up.

### Application 1: Regulatory compliance check

The invention can also be used for checking whether existing promises or legal regulations are compliant with a business process model.

This can be treated by first deriving a privacy policy for the business model (as given above) and then checking whether the derived policy is at least as strict as the existing one. In other words, the derived policy should be a refinement of the regulations. Suitable algorithms for checking this refinement already exist, e.g., in M. Backes, W. Bagga, G. Karjoth, and M.

Schunter "Efficient Comparison of Enterprise Privacy Policies", Proceedings of 19^{th} ACM Symposium on Applied Computing (SAC), 2004.

### Application 2: Privacy statements

The action privacy-relevant behavior of an enterprise can serve as basis for a privacy statement made to the consumers. The method according to the invention provides this in two ways:
A) Generate privacy statement: By removing the enterprise internals, the derived privacy policy can be simplified into a privacy statement that can be published.
B) Verify privacy statement: After deriving a privacy policy from the business process, this privacy policy can be compared to the privacy statement an enterprise wants to publish.

The invention is not restricted to business process models, but can be used for all kinds of process models, which can be brought in a formalized form, that is, which can be described for example in WPDL or UML2. The invention can be used for example also for a process model which underlies the mail distribution process in a mail distribution center. The policy for this process could comprise a rule concerning the use of the addresses.

Having illustrated and described a preferred embodiment for a novel method and apparatus for, it is noted that variations and modifications in the method and the apparatus can be made without departing from the spirit of the invention or the scope of the appended claims.

## Claims

1. Method for creating a privacy policy from a process model, comprising the following steps:
a) choosing a task (T1 - T11) from the process model,
b) gathering one or more of the elements role, data, purpose, action, obligation, and condition from the task,
c) building up a rule by means of the elements,
d) adding the rule to the privacy policy.

2. Method according to claim 1,
which further comprises the steps of:
- choosing a further task (T1 - T11) in the process model, and
- repeating the steps b) to d) for the further task of the process model.

3. Method according to claim 1 or 2,
- wherein, if the tasks (T1 -T11) of the process model are linked together, the choice of a task is made thereby, that one starts at a beginning of the process model and follows the links to the next task,
- and if the process model contains a branching one follows each branch to the next task.

4. Method according to claim 3,
wherein if the process model contains a branching with a condition, the condition is added to the rule.

5. Method according to any of the previous claims 1 to 4,
wherein if the rule contains several conditions, the conditions are logically linked together.

6. Method according to claim 1,
wherein for extracting the data a simulation of the process is made and it is observed
which data are relevant for which task of the process.

7. Method according to any of the previous claims 1 to 6,
wherein a further rule is added which forbids everything which is not explicitly allowed by the already built up rules.

8. Method according to any of the previous claims 1 to 7,
wherein the process model is gained from a business process.

9. Method according to any of the previous claims 1 to 8,
wherein the process model is described in workflow process definition language.

10. Method for creating a privacy policy from a process model,
comprising the following steps, which are processed automatically by means of a computing device:
a) choosing a task (T1 - T11) from a first data set representing the process model,
b) gathering one or more of the data elements role, data, purpose, action, obligation, and condition from the task,
c) building up a second data set representing a rule by means of the data elements,
d) adding the second data set to a third data set representing the privacy policy.

11. Method for creating a policy from a process model, comprising the following steps:
a) choosing a task (T1 - T11) from a first data set representing the process model,
b) gathering one or more of the data elements role, data, purpose, action, obligation, and condition from the task,
c) building up a second data set representing a rule by means of the data elements,
d) adding the rule to a third data set representing the privacy policy.

12. Method for verifying whether an existing policy is compliant with a process model, comprising the following steps:
- creating a new privacy policy according to any of the previous claims 1 to 11,
- comparing the existing privacy policy with the new privacy policy, and
- and deriving from the result of the comparison whether the existing privacy policy is compliant with the process model.

13. Method for automatically verifying by a computing device whether an existing policy is compliant with a process model,
comprising the following steps:
- creating a data set representing a new privacy policy according to any of the previous claims 1 to 11,
- comparing another data set representing an existing privacy policy with the data set representing the new privacy policy, and
- and deriving from the result of the comparison whether the existing policy is compliant with the process model.

14. Computer program element,
comprising computer program code for performing steps according to the method as claimed in any of the previous claims when loaded in a digital processor of a computing device.

15. Computer program product stored on a computer usable medium,
comprising computer readable program code for causing the computing device to perform the method according to any of the previous claims 1 to 13.

16. Computing device for creating a privacy policy according to any of the previous claims 1 to 11,
comprising an engine for:
- choosing a task (T1-T11) from the process model,
- gathering one or more of the elements role, data, purpose, action, obligation, and condition from the task,
- building up a rule by means of the elements, and
- adding the rule to the privacy policy.

17. Computing device for automatically verifying whether an existing policy is compliant with a process model,
comprising an engine for:
- creating a data set representing a new privacy policy according to any of the previous claims 1 to 11,
- comparing another data set representing an existing privacy policy with the data set representing the new privacy policy, and
- deriving from the result of the comparison whether the existing policy is compliant with the process model.
